(19) Europäisches Patentamt
European Patent Office
Office européen des brevets

(11) Veröffentlichungsnummer: **0 384 033 B1**

(12) **EUROPÄISCHE PATENTSCHRIFT**

(45) Veröffentlichungstag der Patentschrift: **01.06.94**

(51) Int. Cl.[5]: **C08F 297/04**, B60C 1/00

(21) Anmeldenummer: **89123621.8**

(22) Anmeldetag: **21.12.89**

(54) **Statistische AB-Blockcopolymere mit verbesserten Eigenschaften, Verfahren zu ihrer Herstellung und ihre Verwendung.**

(30) Priorität: **21.02.89 DE 3905269**

(43) Veröffentlichungstag der Anmeldung:
**29.08.90 Patentblatt 90/35**

(45) Bekanntmachung des Hinweises auf die Patenterteilung:
**01.06.94 Patentblatt 94/22**

(84) Benannte Vertragsstaaten:
**AT BE CH DE ES FR GB IT LI LU NL SE**

(56) Entgegenhaltungen:
**EP-A- 0 302 196**

(73) Patentinhaber: **HÜLS AKTIENGESELLSCHAFT**

**D-45764 Marl(DE)**

(72) Erfinder: **Wolpers, Jürgen, Dr.**
**Hetfeld 15 c**
**D-4358 Haltern(DE)**
Erfinder: **Herrmann, Christoph, Dr.**
**Siedlungsstrasse 3**
**D-4370 Marl(DE)**
Erfinder: **Hellermann, Walter, Dr.**
**Waldstrasse 16**
**D-4270 Dorsten 21(DE)**

EP 0 384 033 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft statistische Blockcopolymere mit verbesserten Eigenschaften, Verfahren zu ihrer Herstellung und ihre Verwendung.

Aus dem Stand der Technik sind zahlreiche statistische Copolymere auf Basis von konjugierten Dienen und Styrol bekannt, die zur Herstellung von Reifenlaufflächen dienen. Im einzelnen sind hier zu nennen

1. statistische Butadien-Isopren-Styrol-Copolymerisate,
2. Blockcopolymerisate auf Basis eines Diens und einer vinylaromatischen Verbindung und
3. AB-Blockcopolymerisate auf Basis von Butadien, Isopren und Styrol.

Zu 1:

Aus der deutschen Offenlegungsschrift 33 10 118 sind vulkanisierbare Massen bekannt, die als wesentliche Komponente Polyisoprene und/oder amorphe Isopren-Styrol-Copolymere enthalten. Die Polymeren werden bei unterschiedlichen Anfangs- und Endtemperaturen hergestellt.

Gegenstand der deutschen Patentanmeldung P 37 24 870.7 ist ein Verfahren zur Herstellung von Copolymerisaten auf Basis von Butadien, Isopren und Styrol, bei dem als Cokatalysator ein Ethylenglykolether der Formel $R_1 - O - CH_2 - CH_2 - O - R_2$ eingesetzt wird. $R_1$ und $R_2$ sind Alkylreste mit einer unterschiedlichen Zahl von C-Atomen aus der Gruppe Methyl, Ethyl, Propyl und Butyl. Nach diesem Verfahren sind Copolymere zugänglich, in denen mehr als 70 % der Isopreneinheiten in 1,2-und 3,4-Stellung und mehr als 60 % der Butadieneinheiten in 1,2-Stellung vorliegen.

Zu 2:

Breite Anwendung im Reifensektor finden vor allem 2-Blockcopolymere. So beschreibt z. B. die japanische Auslegeschrift 74/37 415 eine Kautschukzusammensetzung für Reifenlaufflächen, die als Kautschukkomponente mindestens 30 Gewichtsprozent eines statistischen Blockcopolymeren auf Basis von Butadien und einer aromatischen Vinylverbindung enthält. Beide Blöcke A und B enthalten bis zu 35 Gewichtsprozent der aromatischen Vinylverbindung; sie unterscheiden sich jedoch im Vinylgehalt: Während Block A 10 bis 20 Gewichtsprozent Vinylgruppen enthält, sind es bei Block B 40 bis 95 %. Das Verhältnis der beiden Blöcke A/B liegt zwischen 20 : 1 und 1 : 20. Das Blockcopolymer ist durch 2-stufige Li-Polymerisation von Butadien und aromatischen Vinylverbindungen erhältlich.

Die deutsche Patentschrift 28 58 063 offenbart ein Elastomermaterial das ein Copolymerisat auf Basis von Styrol und Butadien oder Styrol und Isopren enthält und 5 bis 25 Gewichtsprozent Butadienendblöcke an den Enden aufweisen kann. Aus dem Elastomermaterial lassen sich Reifenlaufflächen herstellen, die im Hinblick auf Wärmestau und Abrollwiderstand verbessert sind. Der Tg liegt vorzugsweise im Bereich von -45 bis -20 °C.

Die in der DE-PS 31 51 139 beschriebenen Kautschukmassen enthalten neben einem Dienkautschuk ein statistisches Styrol-Butadien-Blockcopolymer mit einem Styrolgehalt von 10 bis 40 %. Die Blöcke A und B unterscheiden sich sowohl im Styrol- als auch im Vinylgehalt. Block A weist einen Styrolgehalt von 20 bis 50 % und einen Vinylgehalt zwischen 40 und 75 % auf. Im Block B beträgt der Styrolgehalt maximal 10 % und der Vinylgehalt liegt zwischen 20 und 50 %. Die Vinylgehalte beziehen sich in diesem Fall auf alle Butadieneinheiten des jeweiligen Blockes.

Die DE-OS 32 20 680 offenbart eine Kautschukmasse, die als wesentlichen Bestandteil ein gekuppeltes Blockcopolymeres aus einem konjugierten Dien und einer vinylaromatischen Verbindung, enthält. Das Blockcopolymere umfaßt also stets nur 2 Monomere. Für diese Kautschukmasse wird ein ausgezeichneter Ausgleich zwischen Naßrutschfestigkeit und Rollwiderstand geltend gemacht.

Die Kautschukmassen der DE-OS 35 30 438 enthalten mindestens 20 % eines Styrol-Butadien-AB-Blockcopolymeren, das jeweils mindestens 20 Gewichtsprozent Block A und Block B enthält. Der Block A weist einen Styrolgehalt von 10 bis 80 % und einen mittleren Gehalt an Vinylbindungen im Butadien-Anteil von 30 bis 70 Gewichtsprozent auf. Der Block B besteht aus Polybutadieneinheiten mit einem mittleren Gehalt an Vinylbindungen von nicht mehr als 60 Gewichtsprozent.

Die EP-A-0 054 440 und EP-A-0 134 909 beanspruchen statistische Styrol-Butadien-2- und 3-Blockcopolymere mit guten Naßrutscheigenschaften, Rollwiderstand und Abrieb. Die Verarbeitungsfähigkeit und der kalte Fluß sind lediglich befriedigend, wie die Patentinhaberin schreibt (vgl. EP-A-0 054 440, Seite 1, Zeile 54).

Die 2-Blockcopolymeren der EP-A-0 054 440 bestehen aus einem Block A mit einem Styrolgehalt von 10 bis 50 % und einem Vinylgehalt von 20 bis 50 % und einem Block B mit einem Styrolgehalt von 1 bis

30 % und einem Vinylgehalt über 60 %. Die Dreiblockcopolymeren enthalten daneben einen Polybutadienblock mit einem Vinylgehalt von 10 bis 50 %. Der Vinylgehalt bezieht sich auch hier auf alle Butadieneinheiten des jeweiligen Blockes. Die 2-Blockcopolymeren der EP-A-0 134 909 enthalten einen Block A mit einem Styrolgehalt von 20 bis 50 % und einen Block B mit einem Styrolgehalt von 0 bis 10 % und einem Vinylgehalt von mehr als 20 % und bis zu 50 %.

Aus dem Stand der Technik sind also einerseits statistische Copolymerisate auf Basis von Butadien, Isopren und Styrol bekannt. Diese Copolmerisate weisen jedoch einen hohen Abrieb auf. Ferner zeigen sie eine relativ langsame Vulkanisation.

Aus dem Stand der Technik sind andererseits isoprenfreie AB-Blockcopolymerisate auf Basis von Butadien und Styrol bekannt. Allerdings haften auch diesen Systemen noch Mängel an. So ist die Rutschfestigkeit von Reifenlaufflächen aus den genannten Polymeren noch unzureichend.

Der Fachmann konnte nicht erwarten, daß durch den Einbau von Isopren bei sonst gleichem Dämpfungsmaximum eine Verbesserung der Rutschfestigkeit auftreten würde, da aus der Literatur bekannt ist, daß die Rutschfestigkeit im wesentlichen von der Glasübergangstemperatur Tg und damit von der Dämpfung abhängt, die bei beiden Polymeren das gleiche Maximum aufweisen (Literatur Nordsiek: Kautschuk und Gummi, 38, (1985), Seite 179).

Zu 3:

Schließlich beanspruchen die DE-PS 34 14 657 und die DE-OS 34 24 699 in der Wärme vulkanisierbare Laufstrekken für die Herstellung von Reifenlaufflächen. Als Kautschukkomponente wird u. a. ein Blockcopolymerisat auf Basis von Butadien, Isopren und gegebenenfalls Styrol und/oder Piperylen genannt, daß keine Polystyrolblöcke enthalten soll und im Mittel einem Vinylgehalt von 45 - 80 % aufweist.

Die Glasübergänge der einzelnen Kettensegmente des Blockpolymeren decken einen Tg-Bereich oder 2 oder 3 Teilbereiche ab, der bei -5 bis -20 °C beginnt und bei -50 bis -105 °C endet. Die Dämpfungskurve liefert ein ausgeprägtes, stumpfes Maximum. Die Herstellung erfolgt durch Polymerisation, wobei bereits zu Anfang ein Cokatalysator zugesetzt wird und dann die Temperatur erhöht wird.

Aus der nicht vorveröffentlichten deutschen Patentanmeldung P 37 24 871.8 vom 28.07.1987 sind schließlich AB-Blockcopolymerisate auf Basis von Butadien, Isopren und Styrol bekannt, die zu 40 bis 80 % aus einem Block A mit einem Gehalt an gleichmäßig verteilten Vinylgruppen von 8 bis 60 % und zu 60 bis 20 % aus einem Block B mit einem Vinylgehalt von 75 bis 90 % bestehen.

Die ebenfalls nicht vorveröffentlichte deutsche Patentanmeldung P 38 18 870.8 beschreibt ungesättigte, elastomere AB-Blockcopolymerisate auf Basis von Butadien, Isopren und Styrol, die zu 30 bis 90 % aus einem Block A und entsprechend zu 70 bis 10 % aus einem Block B bestehen, dessen mittlerer Vinyl- und Isopropenylgruppengehalt jeweils um mindestens 30 % höher ist als der des Block A.

In den beiden vorgenannten Blockcopolymeren beträgt der Anteil des Blockes A im ersten Fall mehr als 40 Massen-%, im zweiten Fall mehr als 30 Massen-%. Diese Blockcopolymeren zeigen eine hohe Dämpfung über einen sehr breiten Temperaturbereich und ein ausgewogenes Eigenschaftsbild bezüglich Rutschen, Abrieb und dynamischen Eigenschaften.

Es wurde jetzt überraschend gefunden, daß man bei sehr guten dynamischen Eigenschaften die Rutschfestigkeit verbessern kann, ohne deshalb den Abrieb in dem bisher üblichen Maßstab zu verschlechtern (siehe Vergleichsversuche). Zudem wurde überraschend eine beschleunigte Vulkanisation dieser 2-Blockcopolymeren gegenüber den statistischen Copolymeren festgestellt.

Die erfindungsgemäßen AB-Blockcopolymeren auf der Basis von 25 bis 75 % Butadien, 5 bis 65 % Isopren und 3 bis 35 % Styrol bestehen aus einem Block $A_1$, der aus bis 100 % Butadieneinheiten mit einem Gehalt an gleichmäßig verteilten Vinylgruppen von 8 bis 40 % und entsprechend 15 bis 0 % Styroleinheiten oder 20 bis 0 % Isopreneinheiten mit einem 1,4-Anteil von mindestens 60 %, oder einem Block $A_2$, der aus 50 bis 95 % Butadieneinheiten, 3 bis 40 % Isopren- und 2 bis 15 % Styroleinheiten besteht, wobei die Dieneinheiten einen Gehalt von Vinyl-und Isopropenylgruppen von 8 bis 40 % aufweisen, und einem Block B, der 3 bis 65 % Butadien-, mindestens 16 % Isopreneinheiten und 3 bis 45 % Styroleinheiten enthält, wobei die Dieneinheiten einen Gehalt an Vinyl- und Isopropenylgruppen von 45 bis 90 % aufweisen.

Der Anteil des Blockes $A_1$ ist bis 30% und der Anteil des Blockes $A_2$ weniger als 30%.

Diese $A_1B$- bzw. $A_2B$-Blockcopolymeren zeigen eine hohe Dämpfung nur über einen engen Temperaturbereich, d. h. beide Blöcke bilden eine einzige Phase, deren Dämpfung (Λ) im Bereich von -45 bis +15 °C liegt.

Die AB-Blockcopolymerisate können sowohl linear als auch verzweigt sein. Die Verzweigung kann mit Hilfe eines Verzweigungsmittels während der Polymerisation oder mit Hilfe eines Kupplungsmittels zu Ende

der Polymerisation erreicht werden.

Das Verfahren zur Herstellung der Blockcopolymerisate durch anionische Polymerisation der Monomeren in einem inerten organischen Lösemittel in Gegenwart einer Li-organischen Verbindung ist dadurch gekennzeichnet, daß man zunächst den ersten Block $A_1$ oder $A_2$ durch Polymerisation der jeweils erforderlichen Monomeren, gegebenenfalls in Anwesenheit einer geringen Menge eines Cokatalysators, herstellt. Danach stellt man einen Block B her, indem man ein Gemisch aus Butadien, Isopren und Styrol in Gegenwart eines Cokatalysators polymerisiert.

Im folgenden soll das Verfahren detailliert beschrieben werden.

Als Reaktionsmedium wird ein inertes organisches Lösemittel verwendet.

Geeignet sind insbesondere Kohlenwasserstoffe mit 6 bis 12 C-Atomen wie Pentan, Hexan, Heptan, Oktan und Dekan sowie deren cyclische Analoga. Geeignet sind auch aromatische Lösemittel wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:
Mooney-Viskosität ($ML_{1-4}$, 100 °C, DIN 53 523): 30 bis 130;
Uneinheitlichkeit U = (Mw/Mn) - 1, bestimmt durch gelpermeationschromatografische Analyse (GPC-Analyse): 0,6 bis 3,0;
Bei dem vorliegenden Verfahren wird der Block B in Anwesenheit eines Cokatalysators hergestellt. Ein Kennzeichen der Erfindung besteht darin, daß dieser Block einen gegenüber den ersten Block erhöhten Anteil an 1,2- und/oder 3,4-Struktureinheiten aufweist.

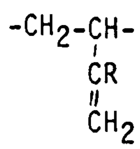

und/oder

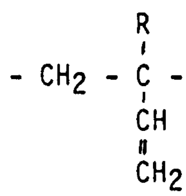

R = H (Butadien)
R = $CH_3$ (Isopren)
Der Cokatalysator wird im allgemeinen aus der Gruppe der Ether oder der tertiären Amine ausgewählt. Selbstverständlich können auch Gemische verschiedener Cokatalysatoren eingesetzt werden.

Geeignete Ether umfassen insbesondere Dialkylether des Ethylenglykols und Diethylenglykols, deren Alkylgruppen jeweils bis zu 4 C-Atome aufweisen, wie Ethylenglykoldiethylether (DEE).

Insbesondere bei der Herstellung von verzweigten Blockcopolymeren werden Ether der allgemeinen Formel

$R_1 - O - CH_2 - CH_2 - O - R_2$

bevorzugt, wobei $R_1$ und $R_2$ Alkylreste mit einer unterschiedlichen Zahl von C-Atomen aus der Gruppe Methyl, Ethyl, n- und iso-Propyl sowie n-, iso-, sek.- und tert.-Butyl sind. Vorzugsweise beträgt die Summe der C-Atome der beiden Reste $R_1$ und $R_2$ 5 bis 7, insbesondere 6. Ein besonders geeigneter Ethylenglykolether ist die Verbindung mit $R_1$ = Ethyl und $R_2$ = tert.-Butyl.

Geeignete tertiäre Amine sind z. B. N,N,N',N'-Tetramethylethylendiamin, N,N,N',N'-Tetraethylethylendiamin und Triethylendiamin.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Es ist auch möglich, bei steigender oder fallender Temperatur zu arbeiten; jedoch ist in diesem Falle dafür Sorge zu tragen, daß die Mikrostruktur nicht grundsätzlich verändert wird.

Bei der Herstellung des Blockes A hängt es von dem gewünschten Vi nylgruppengehalt ab, wieviel Cokatalysator zugegen sein sollte. Das Verhältnis der Monomeren und die Menge des Cokatalysators werden so gewählt, daß das angestrebte Dämpfungsmaximum erreicht wird.

Bei der Herstellung des Blockcopolymeren wird Styrol als Comonomer zugesetzt. Durch geeignete Maßnahmen ist dafür Sorge zu tragen, daß der Gehalt an Polystyrolblöcken im AB-Blockcopolymerisat 2,5 Massen-% nicht überschreitet. Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Alkalisalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$.
- organische Verbindungen der allgemeinen Formel $R_n/SiHal_3/_n$, mit n = 1 bis 6, insbesondere n = 1 und 2. Hierbei ist R ein n-wertiger organischer Rest, beispielsweise ein aliphatischer, cycloaliphatischer oder aromatischer Rest mit 6 bis 16 C-Atomen. Beispielhaft seien 1,2,4-Tris(2-trichlorsilylethyl)-cyclohexan, 1,8-Bis(trichlorsilyl)-octan und 1-(Trichlorsilyl)-octan genannt.
- organische Verbindungen, die mindestens einmal die Gruppierung > $SiHal_2$ enthalten, wie z. B. Dimethylsilylchlorid.
- Halogensilanwasserstoffe der allgemeinen Formel $Si(H)_m(Hal)_{4-m}$ mit $3 \geqq m \geqq 1$.
- Di- und Trivinylbenzole, wie z. B. 1,4-Divinylbenzol.

Es hat sich als zweckmäßig erwiesen, als Kupplungsmittel Divinylbenzol zu verwenden.

Das Verfahren kann sowohl diskontinuierlich wie kontinuierlich betrieben werden.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht vorzugsweise zu mindestens 15 Massen-% aus einem Blockcopolymerisat der Erfindung. Die weiteren Kautschukbestandteile sind die bekannten, amorphen Allzweckkautschuke wie z. B. Styrol-Butadien-Kautschuk, 1,4-cis-Polybutadien, 1,4-cis-Polyisopren und Naturkautschuk.

Aktive, verstärkende Füllstoffe sind beispielsweise Ruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhafte Eigenschaften aus:

- hohe Dämpfung und daraus folgernd durch hohen Naßrutschwiderstand bei gleichbleibend gutem Abrieb

- gute dynamische Eigenschaften, erkennbar an den Werten der Rückprallelastizität und der Kugelzermürbung
- schnelle Vulkanisation

Diese verbesserten Eigenschaften zeigen sich deutlich beim Vergleich mit Produkten des Standes der Technik.

Wie schon angeführt wurde, weisen statistische Copolymerisate auf Basis von Butadien, Isopren und Styrol einen vergleichsweise hohen Abrieb auf, wie aus den Vergleichsversuchen B und C (232 bzw. 247 $mm^3$) aus Tabelle 5 deutlich hervorgeht.

Ferner zeigen sie eine relativ langsame Vulkanisation, gemessen am $t_{90}$-Wert etwa der Vergleichsbeispiele B und C (30 bzw. 29 min). Der $t_{90}$-Wert kennzeichnet den Zeitpunkt, bei dem nach der Vulkameterkurve 90 % des Drehmoments des Endzustandes erreicht sind, d. h. 90 % Ausvulkanisation. Demgegenüber zeigt das erfindungsgemäße Polymer in Beispiel 2 trotz einer höheren Glasübergangstemperatur Tg (die Vulkanisation wird um so träger, je höher die Glasübergangstemperatur) einen signifikant niedrigeren $t_{90}$-Wert (19,9 min) und damit eine wesentlich schnellere Vulkanisation. Bedeutsamer ist jedoch, daß langsame Vulkanisationen, wie die der Vergleichsbeispiele, auch zum sogenannten Marching-Modulus-Verhalten neigen. Mit diesem Begriff kennzeichnet man Polymere, deren Vulkanisation nicht zu einem definierten Endpunkt hinsichtlich Modul bzw. Spannungswert, Rückprallelastizität und Härte kommt, sondern die mit steigender Heizzeit zu stetig sich verändernden Vulkanisationseigenschaften führen, was in der Technik naturgemäß äußerst unerwünscht ist. Dieses nachteilige Verhalten wird durch die erfindungsgemäße Herstellungsweise, wie an den kürzeren $t_{90}$-Werten der Beispiele nachgewiesen, deutlich gemindert oder ganz abgestellt. Außerdem sind die dynamischen Eigenschaften der Vergleichsbeispiele, gemessen an der Erwärmung im Kugelzermürbungstest, deutlich ungünstiger.

Isoprenfreie AB-Blockcopolymerisate auf Basis von Butadien und Styrol (Vergleichsversuche A und D, Tabelle 5) weisen nur einen sehr geringen Temperaturgradienten der Rückprallelastizität auf. Das bedeutet, daß einerseits die Rutschfestigkeit einer mit diesen Polymeren hergestellten Reifenlauffläche bei einem Raumtemperaturelastizitätswert von 30 % (Vergleichsbeispiel A) nur sehr mangelhaft sein wird. Auch Vergleichsbeispiel D weist bei einer Rückprallelastizität von 20 % noch eine unzureichende Rutschfestigkeit auf.

Demgegenüber hat das erfindungsgemäße Beispiel 3, dessen Dämpfungsmaximum bei gleicher Temperatur wie das von Vergleichsbeispiel A liegt, eine Rückprallelastizität von nur 13 % und läßt damit eine wesentlich bessere Rutschfestigkeit erwarten. Die Eigenschaften Rutschfestigkeit (entsprechend Rückprallelastizität bei Raumtemperatur) und Abrieb sind erfahrungsgemäß gegenläufig. Eine Beurteilung von Polymeren mit unterschiedlicher Dämpfung läßt sich dennoch vornehmen, wenn man die Formel

DIN-Abrieb = 274,5 - 6,47 x El.

(Rückprallelastizität bei Raumtemperatur)
verwendet, die bei Elastizitätswerten zwischen etwa 5 und 30 % bei Kautschukmischungen gleicher Rezeptur anwendbar ist. Nach dieser Formel wurden anhand der gemessenen Rückprallelastizitäten sowohl für die erfindungsgemäßen Beispiele als auch für die Vergleichsbeispiele Sollwerte für den DIN-Abrieb errechnet. Diese Werte (vgl. Tabelle 5 in der Zeile Soll-Abrieb nach Formel) belegen die Oberlegenheit der Polymeren nach dem erfindungsgemäßen Verfahren:

Bei den Beispielen 1 und 2 sowie 4 bis 7 sind die tatsächlich gemessenen Abriebwerte deutlich niedriger als errechnet. In Beispiel 3 liegt der gemessene Abriebwert geringfügig höher, jedoch weist das Polymere dieses Beispiels überragende dynamische Eigenschaften auf, wie die niedrige Erwärmung und die lange Laufzeit im Kugelzermürbungstest beweisen. In den Vergleichsbeispielen A und C liegt der gemessene Abrieb deutlich höher als laut Formel, bei den Vergleichsbeispielen B und D liegt er gleich. Hier jedoch sind die dynamischen Eigenschaften ausnehmend schlecht: so läuft das Vulkanisat aus Vergleichsbeispiel B nur zwei Stufen im Kugelzermürbungstest und hat die höchste Erwärmung aller aufgeführten Polymeren. Das bedeutet ein ganz drastisch niedrigeres Niveau der dynamischen Eigenschaften. Auch Vergleichsbeispiel D weist gegenüber den erfindungsgemäßen Beispielen wesentlich schlechtere dynamische Eigenschaften auf, die neben der niedrigeren Rückprallelastizität bei 75 °C auch aus der wesentlich höheren Endtemperatur nach dynamischer Prüfung im sogenannten Goodrich-Flexometer auftritt. Ganz allgemein ist für die Vulkanisate der Vergleichsbeispiele A bis D ein auffallend niedrigeres Niveau der Rückprallelastizität bei 75 °C festzustellen als bei den erfindungsgemäßen Beispielen, jeweils bezogen auf ein vergleichbares Dämpfungsmaximum.

Faßt man alle betrachteten Eigenschaften der Polymervulkanisate einschließlich der dynamischen Eigenschaften zusammen, so ergeben sich für die erfindungsgemäßen Beispiele eindeutige Vorteile im

Eigenschaftsbild gegenüber den Vergleichsbeispielen.

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemitel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die, wenn nicht anders angegeben, in Form einer 15 Gew.-prozentigen Lösung in Hexan zur Anwendung kam.

Die Monomeren Isopren und Styrol wurden vor ihrem Einsatz 24 Stunden über Calciumhydrid unter Rückfluß gekocht, abdestilliert und mit n-Butyllithium in Gegenwart von o-Phenanthrolin austitriert.

Die Glykolether wurden mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt.

Die Dämpfungskurven wurden mit einem Torsionspendel nach Schmieder-Wolf gemäß DIN 53 445 aufgenommen.

Die Vulkameterprüfung erfolgte nach DIN 53 529.

Die Mikrostruktur der Copolymerisate wurde IR-spektroskopisch ermittelt.

Die Umsatzbestimmung erfolgte gravimetrisch, d. h. durch Ermittelung des Feststoffgewichts einer abgestoppten Polymerisationsprobe.

Die Defo-Härte (DH) und die Defo-Elastizität (DE) wurden nach den üblichen Meßmethoden bestimmt (DIN 53 514).

Teile bedeuten Massenteile, Prozent (S) Massen-%.

Beispiel 1

In einem mit trockenem Stickstoff gepülten, ersten V2A-Autoklaven wurden 276 Teile Hexan, 30 Teile 1,3-Butadien und 0,02 Teile DVB vorgelegt und unter thermoelektrischer Kontrolle mit n-Butyllithium (BuLi) titriert. Die Polymerisation wurde bei 50 °C durch Zugabe von 0,051 Teilen BuLi gestartet. Die Temperatur stieg trotz Kühlung kurzzeitig bis auf 55 °C. Nach 128 Minuten, nachdem das 1,3-Butadien praktisch vollständig umgesetzt war, wurde eine IR-Probe entnommen und wie das Endprodukt aufgearbeitet.

Unmittelbar danach wurde innerhalb von 43 Sekunden der Inhalt eines zweiten V2A-Rührautoklaven (40 °C) zugegeben. Dieser enthielt eine mit BuLi titrierte Lösung von 23 Teilen 1,3-Butadien, 28 Teilen Isopren, 19 Teilen Styrol und 0,75 Teilen Diethoxyethan in 192 Teilen Hexan. Die Temperatur wurde konstant auf 51 °C gehalten. Nach 142 Minuten wurde die Polymerisation durch Zugabe einer Lösung von 0,5 Teilen 2,2'-Methylen-bis-(4-methyl-6-tertiärbutylphenol) in 2 Teilen feuchtem Toluol gestoppt. Das Lösemittel wurde mit Wasserdampf abdestilliert und das Polymerisat 24 Stunden bei 70 °C im Umluftschrank getrocknet.

Beispiele 2 bis 6 und Vergleichsbeispiele A und D

Die Reaktionsbedingungen sind, soweit sie nicht Beispiel 1 entsprechen, in Tabelle 1 angegeben. In den Beispielen 4, 5 und 6 wird die gesamte Monomermenge im 1. Autoklaven vorgelegt. Nach einem Teilumsatz wird nur der Ether zudosiert.

Die Vergleichsbeispiele A und D enthalten als Monomere nur Butadien und Styrol.

Vergleichsbeispiele B und C

In einem mit trockenem Stickstoff gespülten V2A-Rührautoklaven werden, wie in Tabelle 2 angegeben, alle Einsatzstoffe vorgelegt. Nach thermoelektrischer Kontrolle der Titration mit BuLi wird die Polymerisation durch Zugabe von BuLi gestartet und in dem angegebenen Temperaturbereich und der Zeit durchgeführt.

Die Aufarbeitung erfolgte wie unter Beispiel 1 beschrieben.

Tabelle 1:

| | Beispiel 2 | Beispiel 3 | Vergleichsbeispiele A | Vergleichsbeispiele D |
|---|---|---|---|---|
| 1. Autoklav | | | | |
| Teile Hexan | 276 | 275 | 275 | 200 |
| Teile Butadien | 20 | 10 | 20 | 33,4 |
| Teile Isopren | - | - | - | - |
| Teile Styrol | - | - | - | - |
| Teile DBV | 0,02 | 0,02 | 0,015 | 0,01 1) |
| Start mit BuLi | 0,05 | 0,04 | 0,051 | 0,056 |
| Zugabe des 2. Autoklaven nach Minuten | 152 | 110 | 146 | 136 |
| entspr. Umsatz | 100 | 100 | 100 | 99 |
| Teile Butadien | 26 | 29 | 57 | 43,2 |
| Teile Isopren | 32 | 36 | - | - |
| Teile Styrol | 22 | 25 | 23 | 23,4 |
| Teile Hexan | 190 | 190 | 190 | 268 |
| Teile Ether | 0,75*) | 0,1*) | 0,75*) | 0,4**)<br>0,1 2) |
| Ende d. Polymerisation nach weiteren Minuten | 118 | 310 | 124 | 164 3) |

*) 1,2-Diethylethan (DEE)

**) 1-tert.-Butoxy-2-Ethoxyethan (BEE)

1) 0,01 Teile Cokatalysator BEE

2) 0,1 Teile Randomizer Natriumalkylbenzolsulfonat (MG 346 g/Mol)

3) Nach Polymerisationsende wurden 0,04 Teile $SnCl_4$ zugesetzt und 60 Minuten lang bei 60 °C umgesetzt.

Tabelle 1: (Fortsetzung)

| | Beispiel 4 | Beispiel 5 | Beispiel 6 | Beispiel 7 |
|---|---|---|---|---|
| 1. Autoklav | | | | |
| Teile Hexan | 470 | 470 | 470 | 470 |
| Teile Butadien | 40 | 40 | 50 | 30 |
| Teile Isopren | 40 | 40 | 25 | 60 |
| Teile Styrol | 20 | 20 | 25 | 10 |
| Teile DVB | 0,015 | 0,015 | 0,015 | 0,02 |
| Start mit BuLi | 0,04 | 0,04 | 0,044 | 0,042 |
| Zugabe des 2. Autoklaven | | | | |
| nach Minuten | 29 | 64 | 30 | 74 |
| entspr. Umsatz | 9 | 20 | 11 | 21 |
| Teile Butadien | - | - | - | - |
| Teile Isopren | - | - | - | - |
| Teile Styrol | - | - | - | - |
| Teile Hexan | - | - | - | - |
| Teile Ether | 1,0**) | 1,0**) | 1,0**) | 0,75**) |
| Ende d. Polymerisation nach weiteren Minuten | 121 | 116 | 120 | 140 |

**) 1-tert.-Butoxy-2-Ethoxyethan (BBE)

Tabelle 2

| | | Vergleichsbeispiele | |
|---|---|---|---|
| | | B | C |
| Teile Hexan | | 400 | 400 |
| Teile Butadien | | 30 | 40 |
| Teile Isopren | | 60 | 40 |
| Teile Styrol | | 10 | 20 |
| Teile DVB | | 0,02 | 0,025 |
| Teile Ether | | 1,0**) | 0,75**) |
| Start mit BuLi (Teile) | | 0,06 | 0,038 |
| Temperatur (° C) | Start | 35 | 40 |
| | Ende | 69 | 88 |
| Minuten | | 66 | 90 |

*) DEE
**) BEE

Das Vergleichsbeispiel A entspricht der JP-AS 74/37 415.
Die Vergleichsbeispiele B und C entsprechen der deutschen Patentanmeldung P 37 24 870.7.
Das Vergleichsbeispiel D entspricht dem Beispiel 2 der DE-OS 32 20 680.

Tabelle 3

| Prozentuale Zusammensetzung der Polymeren bzw. ihrer Blöcke A und B, die durch Polymerisation der folgenden Monomeren erhalten wurden | | | | | | | | |
|---|---|---|---|---|---|---|---|---|
| | Block | Butadien | | | Isopren | | Gesamt-Styrol | Blockanteil S |
| | | trans-1,4 | 1,2*) | cis-1,4 | 3.4 | 1.4 | | |
| Beispiel | | | | | | | | |
| 1 | $A_1$<br>B | 52<br>18 | 14<br>21 | 34<br>13 | -<br>24 | -<br>4 | -<br>20 | -<br>< 0,5 |
| 2 | $A_1$<br>B | 53<br>13 | 14<br>22 | 33<br>10 | -<br>25 | -<br>6 | -<br>24 | -<br>< 0,5 |
| 3 | $A_1$<br>B | 54<br>14 | 12<br>18 | 34<br>10 | -<br>21 | -<br>11 | -<br>26 | -<br>1,8 |
| 4 | $A_2$<br>B | 41<br>7 | 13<br>30 | 23<br>7 | 5<br>30 | 14<br>5 | 4<br>21 | n.b.<br>0,5 |
| 5 | $A_2$<br>B | 36<br>10 | 16<br>25 | 21<br>9 | 8<br>28 | 13<br>6 | 6<br>22 | n.b.<br>0,4 |
| 6 | $A_2$<br>B | 30<br>10 | 20<br>34 | 24<br>8 | 5<br>17 | 7<br>5 | 6<br>26 | n.b.<br>< 0,5 |
| 7 | $A_2$<br>B | 36<br>8 | 11<br>21 | 18<br>7 | 9<br>42 | 24<br>11 | 2<br>1 | n.b.<br>< 0,5 |
| Vergl.-Beispiel | | | | | | | | |
| A | A<br>B | 51<br>16 | 15<br>45 | 33<br>12 | -<br>- | -<br>- | -<br>27 | n.b.<br>n.b. |
| B<br>C | | 4<br>6 | 26<br>30 | 5<br>4 | 48<br>29 | 5<br>7 | 12<br>24 | < 0,5<br>n.b. |
| D | A<br>B | 40<br>21 | 21<br>40 | 29<br>14 | -<br>- | -<br>- | -<br>25 | -<br>1,5 |

*) einschließlich Isopren-1.2
n.b. = nicht bestimmt

Tabelle 4

| Charakterisierung der Polymeren | | | | |
|---|---|---|---|---|
| | | Mooney-Viskosität | DH / DE | λ(Max) (°C) |
| Beispiel | 1 | 36 | 300/11 | + 1 |
| | 2 | 33 | 350/10 | + 4 |
| | 3 | 67 | 900/24 | - 8 |
| | 4 | 40 | 350/10 | + 8 |
| | 5 | 59 | 675/16 | + 5 |
| | 6 | 40 | 400/10 | + 6 |
| | 7 | 35 | 350/13 | ± 0 |
| Vergl. Beispiel | A | 84 | 1950/28 | - 8 |
| | B | 43 | 400/15 | + 8 |
| | C | 62 | 825/23 | + 6 |
| | D | 45 | 675/21 | - 16 |

Rezeptur der Vulkanisation:

Aus den erfindungsgemäßen AB-Blockcopolymerisaten und den Vergleichsbeispielen wurden Vulkanisationsmischungen folgender Zusammensetzung hergestellt und einer eingehenden Prüfung unterzogen:
100 Teile AB-Blockcopolymerisat
50 Teile Ruß N 339
8 Teile hocharomatisches Öl
3 Teile Zinkoxid
1 Teil Stearinsäure
1 Teil N-Isopropyl-N′-phenyl-p-phenylendiamin (VULKANOX$^R$ 4010 NA)
1 Teil N-(1,3-Dimethylbutyl)-N′-phenyl-p-phenylendiamin (VULKANOX$^R$ 4020)
2 Teile KORESIN$^R$ Umsetzungsprodukt von p-tert.-Butylphenol mit Acetylen
0,6 Teile N-Cyclohexyl-1-benzothiazolsulfenamid (CBS, VULKAZIT$^R$ CZ)
0,3 Teile Diphenylguanidin (DPG, VULKAZIT$^R$ DZ)
0,6 Teile N,N′-Dimorpholyldisulfid (SULFASAN$^R$ R)
1,7 Teile Schwefel
Die Produkte VULKANOX 4010 NA, VULKANOX 4020, VULKAZIT CZ und VULKAZIT DZ sind bei der Bayer AG. Leverkusen, SULFASAN R bei Monsanto und KORESIN bei der BASF AG, Ludwigshafen, erhältlich.

Die erhalten physikalischen Werte sind der nachfolgenden Tabelle zu entnehmen.

Tabelle 5: Charakterisierung der Polymeren

| | | Beispiele | | | | | | | Vergleichsbeispiele | | | |
|---|---|---|---|---|---|---|---|---|---|---|---|---|
| | | 1 | 2 | 3 | 4 | 5 | 6 | 7 | A | B | C | D |
| Vulkameter 150 °C, $t_{10}$ | min | 11,1 | 10,4 | 8,7 | 13,7 | 12,3 | 14,4 | 8,8 | 15,0 | 14,2 | 12,3 | 10,7 |
| $t_{90}$ | min | 16,6 | 19,9 | 16,4 | 25,5 | 21,8 | 27,2 | 16,4 | 36,8 | 30,2 | 28,9 | 19,3 |
| Zugfestigkeit | MPa | 15,9 | 17,8 | 18,6 | 10,5 | 11,6 | 15,8 | 16,2 | 16,4 | 13,7 | 11,3 | 15,5 |
| Bruchdehnung | % | 370 | 399 | 476 | 226 | 277 | 362 | 418 | 410 | 407 | 349 | 432 |
| DIN-Abrieb | $mm^3$ | 185 | 217 | 198 | 224 | 218 | 205 | 195 | 199 | 232 | 247 | 153 |
| Härte 22 °C | Shore A | 72 | 73 | 72 | 76 | 73 | 72 | 68 | 75 | 74 | 67 | 65 |
| 75 °C | Shore A | 59 | 57 | 58 | 58 | 58 | 59 | 59 | 67 | 57 | 54 | 55 |
| Elastizität 22 °C | % | 11 | 6 | 13 | 6 | 5 | 7 | 10 | 30 | 6 | 8 | 20 |
| 75 °C | % | 51 | 48 | 49 | 42 | 48 | 46 | 51 | 45 | 40 | 47 | 46 |
| Dämpfungsmaximum | $\Lambda$ max | +1 | +4 | -8 | +8 | +5 | +6 | 0 | -8 | - | - | -16 |
| Tg | °C | - | -4 | - | -2 | -11 | - | - | - | -5 | -5 | - |
| Goodrich-Flexometer T | °C | - | - | +43 | - | - | - | - | - | - | - | +54 |
| Kugelzermürbung | 150 N | 97 | 107 | 96 | 111 | 103 | 103 | 102 | 115 | 126 | 115 | |
| | 200 N | 126 | 127 | 113 | 137 | 121 | 126 | 131 | 147 | 161 | 151 | |
| | 250 N | 156 | 156 | 137 | 161 | 142 | 147 | 164 | - | - | 183 | |
| | 300 N | - | - | 153 | - | - | - | - | | | - | |
| | 350 N | | | - | | | | | | | | |
| Sollwert Abrieb lt. Formel | | 203 | 236 | 190 | 236 | 242 | 229 | 210 | 80 | 236 | 223 | 145 |

## Patentansprüche

1. Statistisches, ungesättigtes Zweiblockcopolymerisat auf Basis von
   25 bis 75 % Butadien-1,3,
   5 bis 65 % Isopren und
   3 bis 35 % Styrol,
   wobei sich die Menge der Monomeren zu 100 % ergänzen,
   bestehend aus
   einem Block $A_1$, der aus
   - bis 100 % Butadieneinheiten mit einem Gehalt an gleichmäßig verteilten Vinylgruppen von 8 bis 40 % und entsprechend
   - 15 - 0 % Styroleinheiten oder
   - 20 - 0 % Isopreneinheiten mit einem 1,4-Anteil von mindestens 60 %

   besteht,
   oder einem Block $A_2$, der aus
   - 50 - 95 % Butadieneinheiten,
   - 3 - 40 % Isopreneinheiten und
   - 2 - 15 % Styroleinheiten,

   besteht, wobei die Dieneinheiten einen Gehalt von Vinyl- und Isopropenylgruppen von 8 bis 40 % aufweisen, und
   einen Block B, der
   - 3 - 65 % Butadieneinheiten,
   - mindestens 16 % Isopreneinheiten und
   - 3 bis 45 % Styroleinheiten

   enthält, wobei die Dieneinheiten einen Gehalt an Vinyl- und Isopropenylgruppen von 45 % bis 90 % aufweisen,
   und dieses Blockcopolymerisat weiterhin dadurch gekennzeichnet sein soll, daß
   der Anteil des Blockes $A_1$ bis 30 %,
   der Anteil des Blockes $A_2$ weniger als 30 % und
   das Maximum der Dämpfung des Zweiblockcopolymeren im Bereich von -45 °C bis +15 °C liegt.

2. Vulkanisierbare Massen gemäß Anspruch 1,
   dadurch gekennzeichnet,
   daß das Blockcopolymerisat mit Verzweigungs- oder Kupplungsmitteln verzweigt ist.

3. Verfahren zur Herstellung des $A_1B$- bzw. $A_2B$-Blockcopolymerisates gemäß Anspruch 1 durch anionische Polymerisation der Monomeren in einem inerten organischen Lösemittel in Gegenwart einer Li-organischen Verbindung, dadurch gekennzeichnet,
   daß man
   a) zunächst den Block $A_1$ oder $A_2$ herstellt, indem man die jeweils benötigten Monomeren, gegebenenfalls in Gegenwart einer geringen Menge Cokatalysator, polymerisiert,
   b) dann einen Block B herstellt, indem man ein Gemisch aus dem benötigten Butadien, Isopren und Styrol in Gegenwart eines Cokatalysators polymerisiert oder
   c) Block B nur durch Zudosierung des Cokatalysators herstellt.

4. Verfahren nach Anspruch 3,
   dadurch gekennzeichnet,
   daß man bereits zu Beginn der Polymerisation des ersten Blockes die gesamte Menge Butadien vorlegt.

5. Verfahren nach den Ansprüchen 3 und 4,
   dadurch gekennzeichnet,
   daß man als Katalysator eine monofunktionelle Li-organische Verbindung einsetzt.

6. Verfahren nach den Ansprüchen 3 bis 5,
   dadurch gekennzeichnet,
   daß man als Cokatalysatoren Glykolether der Formel $R_1(O-CH_2-CH_2)_n-O-R_2$ einsetzt, wobei n = 1 oder 2 und $R_1$ und $R_2$ jeweils für einen Alkylrest mit 1 bis 4 C-Atomen stehen.

**7.** Verfahren nach Anspruch 6,
dadurch gekennzeichnet,
daß n = 1 ist und die Alkylreste $R_1$ und $R_2$ des Glykolethers eine unterschiedliche Anzahl von C-Atomen aufweisen.

**8.** Verfahren nach den Ansprüchen 3 bis 7,
dadurch gekennzeichnet,
daß man die nach vollständiger Polymerisation erhaltenen Polymeren mit einem Kupplungsmittel umsetzt.

**9.** Verfahren nach den Ansprüchen 3 bis 7,
dadurch gekennzeichnet,
daß man wenigstens einen der Verfahrensschritte der Polymerisation in Gegenwart von Divinylbenzol durchführt.

**10.** Verwendung der AB-Blockcopolymerisate gemäß Ansprüch 1 in vulkanisierbaren Massen, enthaltend mindestens 15 Massenteile des Blockcopolymerisates,
sowie weiteren Elastomeren aus der Gruppe Naturkautschuke, Dienkautschuke und Styrol-Butadien-Kautschuke,
Füllstoffe aus der Gruppe der verstärkenden Kohlenstoffrußе, Silikate und pyrogenen Kieselsäuren,
sowie üblichen Vulkanisationssystemen, bestehend aus Vulkanisationsmitteln und gegebenenfalls Vulkanisationsaktivatoren zur Herstellung von Reifenlaufflächen.

**Claims**

**1.** A random unsaturated two-block copolymer based on
from 25 to 75% of 1,3-butadiene,
from 5 to 65% of isoprene and
from 3 to 35% of styrene,
where the total amount of the monomers equals 100%,
composed of
a block $A_1$, which is composed of
- up to 100% of butadiene units containing from 8 to 40% of uniformly distributed vinyl groups and correspondingly
- 15-0% of styrene units or
- 20-0% of isoprene units having a 1,4-content of at least 60%,

or a block $A_2$, which is composed of
- 50-95% of butadiene units,
- 3-40% of isoprene units and
- 2-15% of styrene units,

where the diene units contain from 8 to 40% of vinyl and isopropenyl groups, and
a block B, which contains
- 3-65% of butadiene units,
- at least 16% of isoprene units and
- from 3 to 45% of styrene units,

where the diene units contain from 45% to 90% of vinyl and isopropenyl groups,
said block copolymer being further characterized in that the proportion of block $A_1$ is up to 30%,
the proportion of block $A_2$ is less than 30% and
the damping maximum of the two-block copolymer lies in the range from -45 °C to +15 °C.

**2.** A vulcanizable compound according to claim 1, characterized in that the block copolymer has been branched by means of branching or coupling agents.

**3.** A process for preparing the $A_1B$ or $A_2B$ block copolymer according to claim 1 by anionic polymerization of the monomers in an inert organic solvent in the presence of an organolithium compound, characterized in that
a) first the block $A_1$ or $A_2$ is first prepared by polymerizing the monomers required in each case, if desired in the presence of a small amount of a cocatalyst,

b) then a block B is prepared by polymerizing a mixture of the required butadiene, isoprene and styrene in the presence of a cocatalyst or
c) block B is prepared only by metered addition of the cocatalyst.

**4.** A process according to claim 3, characterized in that the total amount of butadiene is charged right at the start of the polymerization of the first block.

**5.** A process according to either of claims 3 and 4, characterized in that a monofunctional organolithium compound is used as catalyst.

**6.** A process according to any of claims 3 to 5 characterized in that glycol ethers of the formula $R_1(O\text{-}CH_2\text{-}CH_2)_n\text{-}O\text{-}R_2$, where n = 1 or 2 and $R_1$ and $R_2$ are each an alkyl radical having from 1 to 4 carbon atoms, are used as cocatalysts.

**7.** A process according to claim 6 characterized in that n = 1 and the alkyl radicals $R_1$ and $R_2$ of the glycol ether have different numbers of carbon atoms.

**8.** A process according to any of claims 3 to 7, characterized in that the polymers obtained after complete polymerization are reacted with a coupling agent.

**9.** A process according to any of claims 3 to 7, characterized in that at least one of the process steps of the polymerization is carried out in the presence of divinylbenzene.

**10.** The use of the AB block copolymers according to claim 1 in vulcanizable compounds containing at least 15 parts by weight of the block copolymer and also further elastomers selected from the group consisting of natural rubbers, diene rubbers and styrenebutadiene rubbers, fillers selected from the group consisting of reinforcing carbon blacks, silicates and pyrogenic silicas and also conventional vulcanization systems composed of vulcanization agents and, if desired, vulcanization activators for the production of tyre treads.

## Revendications

**1.** Produit de copolymérisation statistique, non-saturé, à deux blocs, à base
de 25 à 75 % de butadiène-(1,3),
de 5 à 65 % d'isoprène et
de 3 à 35 % de styrène,
la quantité des monomères se complétant à 100 %, constitué
par un bloc $A_1$, qui comprend :
- jusqu'à 100 % d'unités butadiène avec une teneur de 8 à 40 % en groupes vinyle uniformément répartis et, de façon correspondante,
- de 15 à zéro % d'unités styrène, ou
- de 20 à zéro % d'unités isoprène avec une fraction 1,4 de 60 % au moins, ou

par un bloc $A_2$, qui comprend :
- de 50 à 95 % d'unités butadiène,
- de 3 à 40 % d'unités isoprène et
- de 2 à 15 % d'unités styrène,

les unités diène présentant une teneur de 8 à 40 % en groupes vinyle et isopropényle, et par un bloc B, qui renferme :
- de 3 à 65 % d'unités butadiène,
- au moins 16 % d'unités isoprène, et
- de 3 à 45 % d'unités styrène,

les unités diène présentant une teneur de 45 à 90% en groupes vinyle et isopropényle,
et ce produit de copolymération en blocs devant en outre être caractérisé par le fait :
que la fraction du bloc $A_1$ atteint jusqu'à 30 %,

que la fraction du bloc $A_2$ est inférieure à 30 % et
que le maximum de l'amortissement du coopolymère à deux blocs se situe dans un domaine de -45 °C à +15 °C.

**2.** Masses vulcanisables selon la revendication 1, caractérisées par le fait que le produit de copolymérisation en blocs est ramifié avec des agents de ramification ou de copulation.

**3.** Procédé de préparation du produit de copolymérisation en blocs $A_1B$ ou $A_2B$ selon la revendication 1, par polymérisation anionique des monomères dans un solvant organique inerte en présence d'un composé organique du lithium,
caractérisé par le fait :
a) que l'on prépare d'abord le bloc $A_1$ ou $A_2$, en polymérisant les monomères chaque fois nécessaires, le cas échéant en présence d'une faible quantité de co-catalyseur,
b) que l'on prépare ensuite un bloc B, en polymérisant un mélange du butadiène nécessaire, d'isoprène et de styrène en présence d'un co-catalyseur, ou
c) que l'on prépare le bloc B en n'ajoutant que le co-catalyseur de façon dosée.

**4.** Procédé selon la revendication 3, caractérisé par le fait que l'on met en place préalablement, déjà au début de la polymérisation du premier bloc, la quantité globale de butadiène.

**5.** Procédé selon les revendications 3 et 4, caractérisé par le fait que l'on utilise, comme catalyseur, un composé organique, monofonctionnel, du lithium.

**6.** Procédé selon les revendications 3 à 5, caractérisé par le fait que l'on utilise, comme co-catalyseurs, des éthers glycoliques de formule

$R_1(O\text{-}CH_2\text{-}CH_2)_n\text{-}O\text{-}R_2$,

$\underline{n}$ étant égal à 1 ou 2 et $R_1$ et $R_2$ représentant chaque fois un radical alkyle comportant de 1 à 4 atomes de carbone.

**7.** Procédé selon la revendication 6, caractérisé par le fait que $\underline{n}$ est égal à 1 et que les radicaux alkyle $R_1$ et $R_2$ de l'éther glycolique présentent un nombre différent d'atomes de carbone.

**8.** Procédé selon les revendications 3 à 7, caractérisé par le fait que l'on fait réagir sur un agent de copulation les polymères obtenus après polymérisation complète.

**9.** Procédé selon les revendications 3 à 7, caractérisé par le fait que l'on effectue au moins l'une des phases du procédé de polymérisation en présence de divinyl-benzène.

**10.** L'utilisation, pour la fabrication de surfaces de roulement pour pneumatiques, des produits AB de copolymérisation en blocs selon la revendication 1 dans des masses vulcanisables, renfermant au moins 15 parties en masse du produit de copolymérisation en blocs,
ainsi que d'autres élastomères du groupe des caoutchoucs naturels, des caoutchoucs diéniques et des caoutchoucs de styrène et de butadiène,
des charges du groupe des noirs de carbone de renforcement, des silicates et des acides siliciques pyrogènes,
ainsi que des systèmes usuels de vulcanisation, constitués par des agents de vulcanisation et, le cas échéant, des activants de vulcanisation.